# EUROPÄISCHE PATENTSCHRIFT

(11) **EP 2 836 417 B1**
(45) Veröffentlichungstag und Bekanntmachung des Hinweises auf die Patenterteilung: **29.06.2016**
(21) Anmeldenummer: 13717457.9
(22) Anmeldetag: 05.04.2013
(51) Int. Cl.: B62D 5/04, F16H 57/021

(54) **LENKGETRIEBE**
STEERING GEAR
MÉCANISME DE DIRECTION

(30) Priorität: 12.04.2012 DE 102012103146
(43) Veröffentlichungstag der Anmeldung: 18.02.2015
(73) Patentinhaber: Robert Bosch Automotive Steering GmbH, 73527 Schwäbisch Gmünd (DE)
(72) Erfinder: HAFERMALZ, Jens, 73116 Wäschenbeuren (DE); FÜCHSEL, Dennis, 73527 Schwäbisch Gmünd (DE)
(86) Internationale Anmeldenummer: PCT/EP2013/057172
(87) Internationale Veröffentlichungsnummer: WO 2013/152995

(56) Entgegenhaltungen:
- WO-A1-2011/129280
- DE-A1-102009 002 940
- DE-A1-102009 054 655

## Beschreibung

Die Erfindung betrifft ein Lenkgetriebe und insbesondere ein Lenkgetriebe für ein Hilfskraftlenksystem eines Kraftfahrzeugs.

Bei den meisten Kraftfahrzeugen werden Hilfskraftlenksysteme verbaut, die beim Lenken ein unterstützendes Drehmoment erzeugen und dadurch das von dem Fahrer auf die Lenksäule aufzubringende Lenkmoment reduzieren.

Die bekannten Hilfskraftlenksysteme basieren auf einem Lenkgetriebe, das die Antriebsleitung eines hydraulischen oder elektrischen Antriebs übersetzt und auf die Lenksäule überträgt. Derartige Lenkgetriebe sind regelmäßig in Form eines Schraubwälzgetriebes und insbesondere als Schraubradgetriebe oder Schneckengetriebe ausgebildet, d.h. diese umfassen ein Zahnrad, das direkt oder indirekt mit der Lenkstange verbunden ist, sowie ein damit über eine Ritzelwelle von dem Antrieb angetriebenes Ritzel.

Als problematisch bei derartigen Lenkgetrieben hat sich Getriebespiel gezeigt, das sich aufgrund von Bauteiltoleranzen, unterschiedlicher Wärmedehnung der Getriebeelemente und aufgrund von Verschleiß ausbildet. Insbesondere beim sogenannten Wechsellenken, d.h. bei dem direkt aufeinander folgenden Lenken mit wechselndem Lenkeinschlag, erzeugt ein solches Getriebespiel unerwünschte Geräusch, die aus dem sich abwechselnden Anliegen gegenüberliegender Flanken der Zähne von Ritzel und Zahnrad resultieren.

Bekannt ist, dieses Getriebespiel dadurch zu eliminieren, dass die Ritzelwelle verschwenkbar um eine Achse, die senkrecht zur der Längsachse der Ritzelwelle und in einem Abstand zu dem Verzahnungseingriff von Ritzel und Zahnrad verläuft, gelagert ist und mittels eines oder mehrerer Federelemente gegen das Zahnrad gedrückt wird. Die Verschwenkbarkeit der Ritzelwelle wird dabei in eine der zwei Lagerungen, über die die Ritzelwelle endseitig gelagert ist, integriert. Diese Lagerung wird auch als "Festlager" bezeichnet. Die Lagerung im Bereich des anderen Endes ist dann mit Spiel ausgeführt (sogenanntes "Loslager"), um die durch die Schwenkbewegung hervorgerufene Auslenkung zu ermöglichen. Das Festlager wird regelmäßig antriebsseitig vorgesehen, während das Loslager an dem freien Ende der Ritzelwelle vorgesehen wird. Das oder die Federelemente zum Andrücken des Ritzels an das Zahnrad sind regelmäßig in das Loslager integriert.

Ein entsprechendes gattungsgemäßes Lenksystem ist beispielsweise aus der WO 2011/073089 A1 bekannt. Dort ist vorgesehen, das Wälzlager, das die Ritzelwelle im Bereich des Festlagers aufnimmt, außenseitig in einem Schwenkring zu lagern. Der Schwenkring umfasst einen Innenring, der das Wälzlager weitgehend spielfrei aufnimmt und einen Außenring, der weitgehend spielfrei in einer Bohrung eines Gehäuses des Lenkgetriebes gehalten ist, wobei der Außen- und der Innenring über mehrere schmale Stege verbunden sind, die bei einem Verdrehen von Außenring zu Innenring tordiert werden.

Des Weiteren offenbart das Dokument WO 2011/129280 A1 die Präambel des Anspruchs 1.

Andere Lösungen zur Ausbildung des schwenkbaren Festlagers sehen vor, das Wälzlager außenseitig in einem Gleitlager oder innenseitig in einer Silentbuchse schwenkbar zu lagern, oder einfach ein Wälzlager mit so viel Spiel vorzusehen, dass die gewünschte Verschwenkbarkeit möglich ist.
Bei den bekannten Lösungen kreuzt die Schwenkachse konstruktiv bedingt die Mittelachse des Festlagers bzw. die Längsachse der Ritzelwelle.
Nachteilig bei den aus dem Stand der Technik bekannten Lagerungen zur Realisierung von Spielfreiheit des Eingriffs von Ritzel und Zahnrad sind spürbar unterschiedliche Lenkverhalten beim Links- bzw. Rechtsdrehen der Lenksäule.
Ausgehend von diesem Stand der Technik lag der Erfindung die Aufgabe zugrunde, ein verbessertes Lenkgetriebe für ein Hilfskraftlenksystem eines Kraftfahrzeugs anzugeben. Insbesondere sollte ein Lenkgetriebe angegeben werden, dass das von dem beschriebenen Stand der Technik bekannte, unterschiedliche Lenkverhalten beim Links- bzw. Rechtsdrehen der Lenksäule nicht oder zumindest nur in einem verminderten Maße aufweist.
Diese Aufgabe wird durch den Gegenstand des unabhängigen Patentanspruchs gelöst. Vorteilhafte Ausführungsformen sind Gegenstand der abhängigen Patentansprüche und ergeben sich aus der nachfolgenden Beschreibung der Erfindung.
Der Erfindung liegt die Erkenntnis zugrunde, das sich bei den bekannten Lenkgetrieben mit Getriebespielausgleich das unterschiedliche Lenkverhalten als Folge entgegengesetzt gerichteter Momente um die Schwenkachse des Festlagers ergibt, die beim Links bzw. Rechtsdrehen der Lenksäule und der entsprechenden Unterstützungsdrehung des Antriebs des Hilfskraftlenksystem erzeugt werden. Diese unterschiedlichen Momente resultieren aus den entgegengesetzt gerichteten Verzahnungskräften beim Links- bzw. Rechtsdrehen in Verbindung mit dem Hebelarm, der sich aus dem Abstand der Wirkungslinie der Verzahnungskräfte zu der Schwenkachse ergibt. Die entgegengesetzten Reaktionsmomente um die Schwenkachse bewirken in der einen Richtung eine Erhöhung der Kraft, mit der das Ritzel gegen das Zahnrad gedrückt wird, und folglich eine Erhöhung des Reibmoments des Getriebes, und in der entgegengesetzten Richtung eine entsprechende Verringerung des Reibmoments des Getriebes.

Der Erfindung liegt daher der Gedanke zugrunde, diese entgegengesetzt wirkenden Momente möglichst zu eliminieren, zumindest jedoch zu verringern. Dies erfolgt dadurch, dass der radiale Abstand zwischen der Wirkungslinie der Verzahnungskräfte und der Schwenkachse möglichst klein ausgebildet und vorzugsweise bis auf (im Wesentlichen) null reduziert wird. Eine Verringerung dieses Abstands (vorzugsweise bis auf null) bewirkt im gleichen Maße eine Verringerung (Eliminierung) der Reaktionsmomente. Das aus dem Stand der Technik bekannte unterschiedliche Lenkverhalten beim Links- bzw. Rechtsdrehen kann dadurch verringert oder vollständig vermieden werden.

Ein gattungsgemäßes Lenkgetriebe mit einem Zahnrad, einem damit kämmenden Ritzel und einer das Ritzel umfassenden Ritzelwelle, die um eine quer zur Längsachse der Ritzelwelle liegende Schwenkachse verschwenkbar ist, ist demnach erfindungsgemäß dadurch weitergebildet, dass der radiale Abstand (bezogen auf die Ritzelwelle oder das Zahnrad) zwischen der Schwenkachse und dem Verzahnungseingriff möglichst klein, zumindest jedoch kleiner als der Kernradius des Ritzels (d.h. der radiale Abstand zwischen der Längsachse der Ritzelwelle und dem Verzahnungsgrund des Ritzels) ist.

Besonders bevorzugt ist dieser Abstand im Wesentlichen null, wodurch die Entstehung der das unterschiedliche Lenkverhalten hervorrufenden Reaktionsmomente vollständig vermieden werden kann.

Als "Verzahnungseingriff" wird erfindungsgemäß die Tangentialebene im Berührungspunkt der Teil- bzw. Wälzkreise von Ritzel und Zahnrad verstanden.

In einer bevorzugten Ausgestaltung des erfindungsgemäßen Lenkgetriebes kann vorgesehen sein, die Schwenkachse in einer Lagerung der Ritzelwelle anzuordnen, die im Bereich eines der Enden und vorzugsweise im Bereich des antriebsseitigen Endes (d.h. desjenigen Endes der Ritzelwelle, mit dem diese mit einem Antrieb, z.B. einem Elektromotor, verbunden ist) positioniert ist. Hierzu kann eine (erste) Buchse vorgesehen sein, die (mindestens) einen (vorzugsweise ringförmigen) Außenteil und (mindestens) einen (vorzugsweise ringförmigen) Innenteil aufweist, der innerhalb des Außenteils angeordnet ist, wobei der Außenteil und der Innenteil zur Ausbildung der Schwenkachse über zumindest einen, eine Relativverdrehung von Außenteil zu Innenteil zulassenden Steg verbunden sind. Der Steg kann hierzu vorzugsweise deformierbar und insbesondere elastisch deformierbar ausgebildet sein, so dass dieser die Wirkung eines Torsionsfederstabs aufweist. Dadurch kann auf einfache Weise nicht nur die Schwenkachse in der (ersten) Buchse realisiert werden, sondern zusätzlich können auch elastische Rückstellkräfte erzeugt werden, über die ein Andrücken des Ritzels an das Zahnrad mit dem Ziel des Getriebespielausgleichs realisiert werden kann. Hierzu ist vorzugsweise vorgesehen, dass der Steg (der in das Gehäuse des Lenkgetriebes integrierten Buchse) tordiert ist.

Negative Auswirkung auf das Getriebespiel hat insbesondere der Verschleiß von Zahnrad und Ritzel, d.h. das Getriebespiel wird tendenziell über der Lebensdauer des Lenkgetriebes größer. Dies erfordert im Umkehrschluss einen über der Lebensdauer verstärkt wirkenden Getriebespielausgleich. Dies erfordert wiederum, dass die elastische Auslenkung und somit die Vorspannung des den Getriebespielausgleich bewirkenden Federelements bei einem neuen Lenkgetriebe relativ groß gewählt werden sollte. Bei der bevorzugten Ausführungsform des erfindungsgemäßen Lenkgetriebes, bei der die Vorspannung über einen oder mehrere als Torsionsfederstab wirkende Stege realisiert wird, sollte daher vorgesehen sein, dass der Außenteil gegenüber dem Innenteil der Buchse in einem hinreichenden Maße verdreht ist und dass sich diese Verdrehung bei dem zu erwartenden maximalen Getriebespiel möglichst nicht auf null reduziert. Hierzu ist vorzugsweise vorgesehen, dass die Längsachse der Ritzelwelle im neuwertigen Zustand des Lenkgetriebes einen definierten Schwenkwinkel mit der Verzahnungsebene einschließt.

Um dies zu erreichen kann vorgesehen sein, eine Aufnahme für das Festlager in dem Gehäuse des Lenkgetriebes so relativ zu dem Zahnrad zu positionieren, dass sich dieser Verschwenkwinkel geometrisch bei nicht verschlissenem Zahnrad und Ritzel ergibt. Bevorzugt kann jedoch vorgesehen sein, einen radialen Versatz der Längsachse der Ritzelwelle im Bereich des Festlagers von der Mittelachse des Zahnrads, aus dem der definierte Schwenkwinkel resultiert, über eine nichtkonzentrische Lage des Außenteils und des Innenteils der (ersten) Buchse zu realisieren. Dadurch wird eine kostengünstige Fertigung des Gehäuses des Lenkgetriebes ermöglicht, wenn die Ritzelwelle - wie vorzugsweise vorgesehen - im Bereich ihrer beiden Enden in dem Gehäuse gelagert ist.

Neben der Lagerung des vorzugsweise antriebsseitigen Endes der Ritzelwelle in der (ersten) Buchse des Festlagers ist vorzugsweise an dem freien Ende der Ritzelwelle eine (zweite) Buchse als Teil eines Loslagers vorgesehen, das eine Auslenkung des freien Endes der Ritzelwelle infolge eines Verschwenkens um die in dem Festlager ausgebildete Schwenkachse zulässt. Hierzu ist vorzugsweise vorgesehen, dass die (zweite) Buchse (mindestens) einen Außenteil und (mindestens) einen Innenteil aufweist, wobei der Außenteil und der Innenteil so miteinander verbunden sind, dass diese in zumindest einer radialen Richtung (bezogen auf die Ritzelwelle) zueinander beweglich sind.

Das Außenteil und das Innenteil der (zweiten) Buchse des Loslagers sind vorzugsweise ebenso wie diejenigen der (ersten) Buchse des Festlagers (kreis-)ringförmig ausgebildet. Dies ermöglicht in Kombination mit dem in der (ersten) Buchse des Festlagers ausgebildeten radialen Versatz die Fertigung der beiden Aufnahmen in dem Gehäuse des Lenkgetriebe in einem Arbeitsgang mittels eines spanend wirkenden Werkzeugs, da trotz des für die Funktion des Getriebespielausgleichs vorgesehenen Versatzes der Mittelachsen des Festlagers und des Loslagers die beiden Aufnahmen konzentrisch angeordnet werden können.

Eine Ausbildung der (zweiten) Buchse des Loslagers als zusammenhängende Einheit, die dennoch die gewünschte radiale Verschiebbarkeit von Außenteil zu Innenteil zulässt, kann vorsehen, dass der Außenteil und der Innenteil über (mindestens) ein Gelenk miteinander verbunden sind.

Mit Ausnahme der Relativverschiebung zwischen dem Außenteil und dem Innenteil der (zweiten) Buchse des Loslagers, die eine Auslenkung des freien Endes der Ritzelwelle ermöglichen soll, sollte die Lagerung des freien Endes der Ritzelwelle möglichst spielfrei sein, um ein Verschränken des Ritzels über dem Zahnrad zu vermeiden. Um dies zu erreichen ist vorzugsweise vorgesehen, dass der Abstand des Außenteils zu dem Innenteil in dem dem Gelenk radial gegenüberliegenden Abschnitt möglichst klein, vorzugsweise jedoch nicht null ist. Beispielsweise kann ein Abstand von lediglich ca. 0,1mm vorgesehen sein.

Das Gelenk kann vorzugsweise dadurch ausgebildet sein, dass sich ein Abschnitt des Außenteils und ein Abschnitt des Innenteils im Bereich des Gelenks berühren, wobei diese Abschnitte von Außen- und Innenteil von einer Hülle aus einem hochelastischen Werkstoff (z.B. einem Elastomer) umgeben sind. Die Gelenkbewegung wird dann durch ein Gleiten oder Wälzen der Abschnitte von Außen- und Innenteil aufeinander ermöglicht, während die Hülle zum einen diese Gelenkbewegung kaum behindert und zum anderen den Zusammenhalt von Außenteil und Innenteil gewährleistet.

Um die Herstellung und die Montage der (zweiten) Buchse des Loslagers möglichst kostengünstig zu gestalten kann vorzugsweise vorgesehen sein, dass sich der vorgesehene kleine Abstand in dem dem Gelenk radial gegenüberliegenden Abschnitt der Buchse erst bei der Montage der Buchse in dem Gehäuse einstellt. Dies kann vorzugsweise dadurch erreicht werden, dass der Außenteil und/oder der Innenteil in dem relevanten Abschnitt ein in radialer Richtung verschiebbares Begrenzungselement aufweist, dessen radiale Breite zudem vorzugsweise größer ist als die radiale Breite des entsprechenden Abschnitts des Außenteils bzw. des Innenteils. Dadurch kann erreicht werden, dass das Begrenzungselement bei einer nicht in dem Gehäuse des Lenkgetriebes (bzw. auf der Ritzelwelle) montierten (zweiten) Buchse des Loslagers soweit radial nach außen (bzw. nach innen) verschoben ist, dass sich ein für die Herstellung und Montage der Buchse vorteilhafter relativ großer Abstand von Innenteil zu Begrenzungselement einstellt. Dabei kann das Begrenzungselement infolge seiner relativ großen radialen Breite über die Außenfläche des Außenteils (bzw. die Innenfläche des Innenteils) ragen. Dieser Überstand des Begrenzungselements ist im montierten Zustand der (zweiten) Buchse des Loslagers aufgrund einer Kollision mit der Aufnahme des Gehäuses (bzw. der Ritzelwelle) nicht möglich. Das Befestigungselement muss für die Montage somit radial nach innen (bzw. nach außen) verschoben werden und wird in dieser Position, in der dieses mit dem Innenring den gewünschten kleinen Abstand ausbildet, von der Aufnahme des Gehäuses (bzw. der Ritzelwelle) fixiert.

Die Erfindung wird nachfolgend anhand eines in den Zeichnungen dargestellten Ausführungsbeispiels näher erläutert.

In den Zeichnungen zeigt:
- Fig. 1:: ein erfindungsgemäßes Lenkgetriebe in einem Längsschnitt;
- Fig. 2:: die Funktion des Lenkgetriebes der Fig. 1 in einer schematischen Darstellung;
- Fig. 3:: das bei dem Lenkgetriebe der Fig. 1 zum Einsatz kommende Festlager in einer Aufsicht;
- Fig. 4:: das Festlager der Fig. 3 in einem Längsschnitt entlang der Schnittebene IV - IV in Fig. 3;
- Fig. 5:: die bei dem Lenkgetriebe der Fig. 1 zum Einsatz kommende Buchse des Loslagers in einer Aufsicht;
- Fig. 6:: die Buchse der Fig. 5 in einem Längsschnitt entlang der Schnittebene VI - VI in Fig. 5; und
- Fig. 7:: die Erzeugung von Reaktionsmomenten bei einem gattungsgemäßen Lenkgetriebe gemäß dem Stand der Technik in einer schematischen Darstellung entsprechend der Fig. 2.

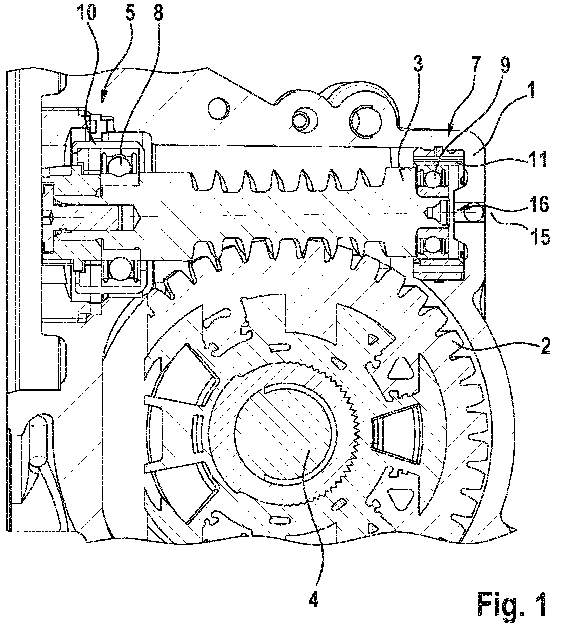

Die Fig. 1 zeigt die wesentlichen Bestandteile einer Ausführungsform eines erfindungsgemäßen Lenkgetriebes. Dieses umfasst ein Gehäuse 1, innerhalb dessen ein Zahnrad 2 sowie ein mit dem Zahnrad 2 kämmendes Ritzel 3 gelagert sind. Ritzel 3 und eine das Ritzel umfassende Ritzelwelle sind in Form einer Schnecke integral ausgebildet.

Das Zahnrad 2 ist fest auf einer Lenksäule 4 eines Kraftfahrzeugs befestigt.

Das Ritzel 3 weist ein antriebsseitiges Ende auf, über das diese mit der Abtriebswelle eines nicht dargestellten Antriebs (z.B. Elektromotor) verbindbar ist. Im Bereich dieses antriebsseitigen Endes ist das Ritzel 3 mittels einer ersten Lagerung in dem Gehäuse gelagert. Diese Lagerung ist als Festlager 5 ausgebildet, das im Wesentlichen keine Translation des Ritzels 3 relativ zu dem Gehäuse 1, jedoch ein Verschwenken um eine Schwenkachse 6 zulässt.

Dieses Verschwenken bewirkt ein Auslenken des dem antriebsseitigen Ende gegenüberliegenden freien Endes des Ritzels 3, die dort mittels eines Loslagers 7 in einer entsprechenden Aufnahme des Gehäuses 1 gelagert ist. Dieses Loslager 7 ist so ausgebildet, dass es die sich aus dem Verschwenken des Ritzels 3 ergebende Auslenkung des freien Endes zulässt.

Sowohl das Festlager 5 als auch das Loslager 7 umfassen jeweils ein Wälzlager 8, 9, in dem der entsprechende Abschnitt des Ritzels 3 weitgehend spielfrei gelagert ist. Die Wälzlager 8, 9 selbst sind in jeweils einer Buchse 10, 11 gelagert, die wiederum weitgehend spielfrei in einer entsprechenden Aufnahme des Gehäuses 1 angeordnet ist. Die Buchsen 10, 11 sind konstruktiv so ausgebildet, dass diese - im Fall des Festlagers 5 - das Verschwenken des Ritzels 3 um die Schwenkachse 6 und - im Fall des Loslagers 7 - das Auslenken des freien Endes des Ritzels 3 ermöglichen.

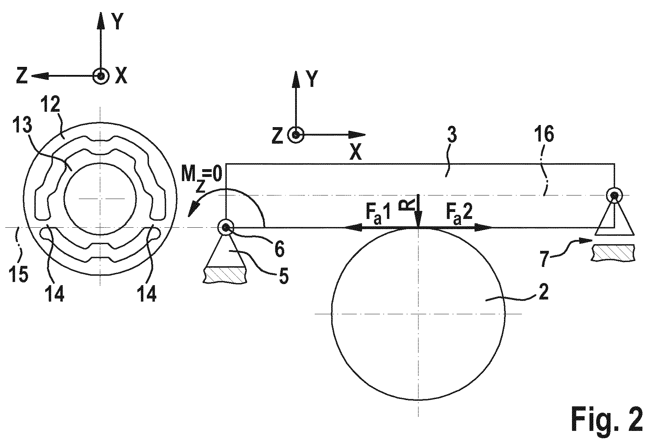

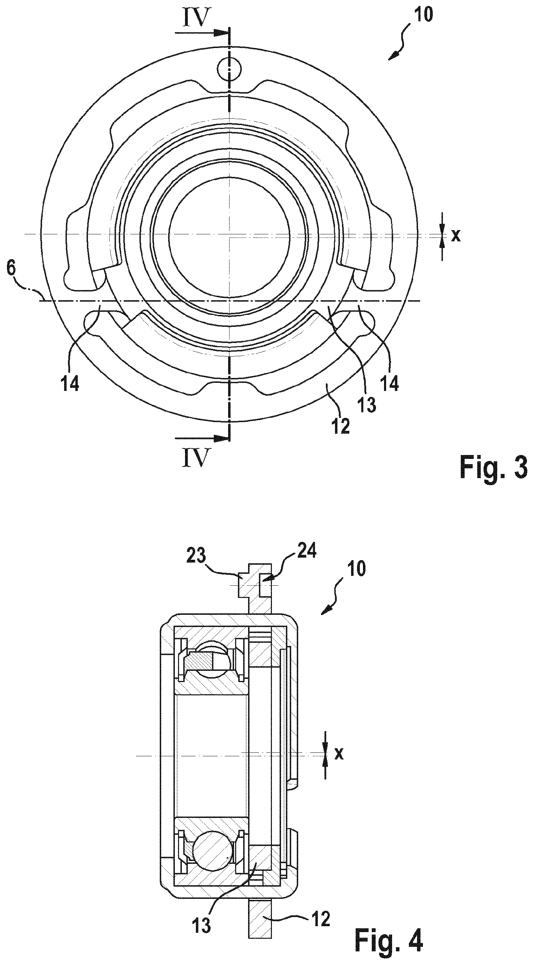

Hierzu umfasst die Buchse 10 des Festlagers 5 einen Außenteil in Form eines Außenrings 12 (z.B. aus Federstahl) und einen Innenteil in Form eines Innenrings 13 (z.B. aus Federstahl). Der Außenring 12 ist über zwei Stege 14 (z.B. aus Federstahl) mit dem Innenring 13 verbunden, wobei die zwei Stege 14 weitgehend kollinear verlaufen und dadurch die Schwenkachse 6 ausbilden, um die der Außenring 12 relativ zu dem Innenring 13 verschwenkt werden kann. Die Stege 14 und damit die Schwenkachse 6 verlaufen dabei jedoch nicht durch das Zentrum der Buchse 10, sondern radial versetzt dazu (vgl. Fig. 2 und 3). Die Schwenkachse kreuzt somit nicht die Längsachse 16 des Ritzels 3.

Durch diesen radialen Versatz der Stege 14 zu dem Zentrum der Buchse wird die Schwenkachse 6 in die Nähe des Außenumfangs des Ritzels 3 verlagert, wodurch die Ausbildung von Reaktionsmomenten (M_{z}), die sich infolge der beim Zahneingriff von Ritzel und Zahnrad ergebenden Verzahnungskräfte (Fₐ₁, Fₐ₂) in Verbindung mit dem Abstand der Wirkungslinie 15 der Verzahnungskräfte (Fₐ₁, Fₐ₂) von der Schwenkachse 6 ergeben bzw. ergeben würden, verringert bzw. vermieden werden können. Zur möglichst vollständigen Vermeidung der Reaktionsmomente (M_{z}=0) ist vorgesehen, die Schwenkachse 6 innerhalb der Tangentialebene liegt, die in dem Berührpunkt der beiden Teil- bzw. Wälzkreise von Zahnrad 2 und Ritzel 3 ausgebildet ist (Verzahnungseingriff 15), wie dies in der Fig. 2 schematisch dargestellt ist.

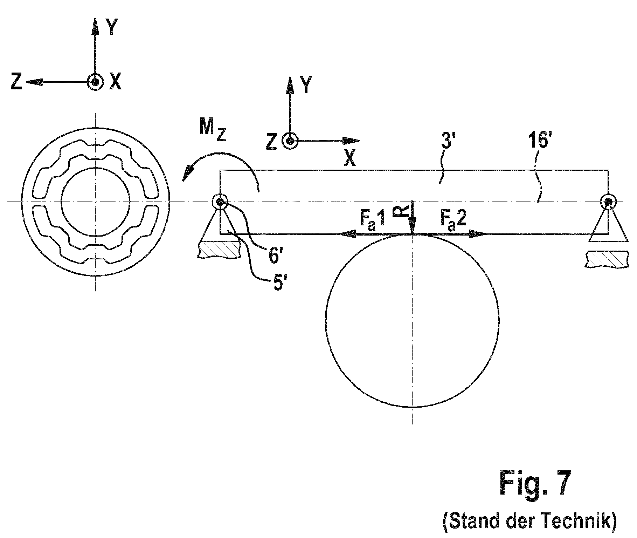

Im Vergleich dazu ist in der Fig. 7 dargestellt, wie sich bei einem gattungsgemäßen Lenkgetriebe gemäß dem Stand der Technik ein Reaktionsmoment (M_{z}≠0) um die Schwenkachse 6' ausbildet, die dort die Längsachse 16' der Schnecke 3' kreuzt, folglich durch das Zentrum der Buchse des Loslagers 5' verläuft. Dieses Reaktionsmoment (M_{z}≠0) führt zu einem unterschiedlichen Lenkverhalten bei einer Linksdrehung der Lenksäule einerseits und einer Rechtsdrehung der Lenksäule andererseits, da infolge der entgegengesetzt gerichteten Verzahnungskräfte (Fₐ₁, Fₐ₂) auch die Richtungen der daraus resultierenden Reaktionsmomente (M_{z}≠0) entgegengesetzt sind. Dies führt bei der Drehung der Lenksäule in Abhängigkeit von der Drehrichtung zu einer Verstärkung oder Verringerung der Andrückkraft (R) und infolge dessen zu einer Verstärkung oder Verringerung des Reibmoments des Lenkgetriebes.

Am Außenring 12 der Buchse 10 des Festlagers 5 ist weiterhin noch eine Nase 23 und auf der Gegenseite eine entsprechende Vertiefung 24 ausgebildet. Diese dienen der eindeutigen Positionierung der Buchse 10 bzw. des Festlagers 5 in dem Gehäuse 1. Das Gehäuse 1 weist hierzu eine entsprechende Gegenkontur auf.

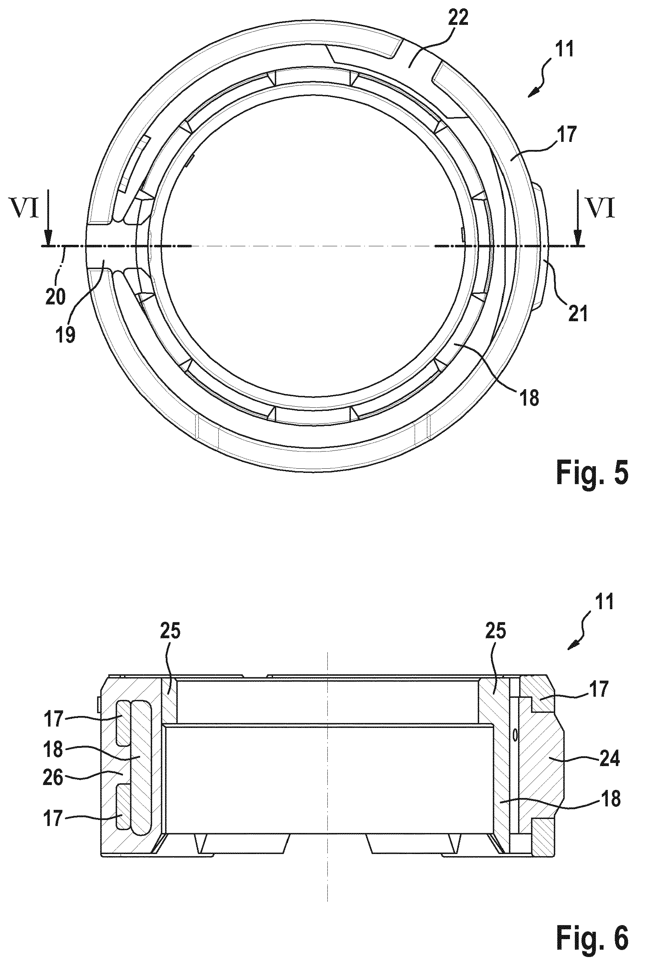

Die Fig. 5 und 6 zeigen die Buchse, die einen Teil des im Bereich des freien Endes der Schnecke 3 angeordneten Loslagers 7 ausbildet. Eine wesentliche Funktion dieser Buchse 11 liegt darin, die translatorische Bewegung (Auslenkung) des freien Endes der Schnecke 3 infolge ihres Verschwenkens um die in dem Festlager 5 ausgebildete Schwenkachse 6 zuzulassen. Hierzu umfasst die Buchse 11 ebenfalls einen Außenteil in Form eines Außenrings 17 und einen Innenteil in Form eines Innenrings 18. Der Innenring 18 ist mit einem im Wesentlichen konstanten Abstand konzentrisch innerhalb des Außenrings 17 angeordnet. In einem Abschnitt ist der Innenring 18 über einen radial verlaufenden Steg 19 mit dem Außenring 17 verbunden. Im Bereich des Stegs 19 berühren sich Abschnitte des Außenrings 17 und des Innenrings 18, wobei diese Abschnitte von einem Elastomerring 26 umgeben sind. Durch diese Ausgestaltung bildet der Steg 19 ein Schwenkgelenk mit geringem Schwenkmoment aus, das ein Verschwenken von Außenring 17 zu Innenring 18 um eine im Bereich des Stegs 19 liegende Schwenkachse ermöglicht. Bei dieser Schwenkbewegung gleiten bzw. wälzen der Außenring 17 und der Innenring 18 in den sich berührenden Abschnitten aufeinander, während der Elastomerring diese Relativbewegung von Außenring 17 zu Innenring 18 zulässt und zusätzlich deren Zusammenhalt gewährleistet.

Der Innenring 18 der Buchse 11 des Loslagers 7 weist weiterhin einen Bund 24 auf. Dieser dient in Verbindung mit dem Wälzlager 9 der axialen Positionierung der Buchse 11 im Gehäuse 1.

Vorgesehen ist, die Buchse 11 des Loslagers 7 derart in das Gehäuse 1 des Lenkgetriebes zu integrieren, dass das Verschwenken des Ritzels 3 um die in dem Festlager 5 ausgebildete Schwenkachse 6 zu einem Verschieben des Innenrings 18 relativ zu dem Außenring 17 in einer Richtung führt, die im wesentlichen senkrecht zu der durch den Steg 19 führenden Radialachse 20 ist. In der zu dieser Richtung senkrechten Richtung, d.h. in Richtung der durch den Steg 19 führenden Radialachse 20 der Buchse 11, soll dagegen möglichst keine Verschiebbarkeit von Außenring 17 zu Innenring 18 möglich sein, um ein Verschränken des Ritzels 3 auf dem Zahnrad 2 im Betrieb des Lenkgetriebes möglichst zu vermeiden. Dies wird dadurch erreicht, dass der Abstand zwischen dem Innenring 18 und dem Außenring 17 in dem dem Steg 19 radial gegenüberliegenden Abschnitt der Buchse 11 auf ein kleines Maß von z.B. 0,1mm begrenzt wird. Dies erfolgt mittels eines Begrenzungselements 21, das in radialer Richtung verschiebbar innerhalb des Außenrings 17 gelagert ist. Das Begrenzungselement 21 weist eine radiale Breite auf, die größer als die radiale Breite des Außenrings 17 ist. Dadurch lässt sich das Begrenzungselement 21 der noch nicht in dem Gehäuse 1 montierten Buchse 11 soweit nach außen verschieben, dass dieses die Außenfläche des Außenrings 17 überragt. Dadurch stellt sich ein relativ großer Abstand zwischen der Außenseite des Innenrings 18 und dem Begrenzungselement 21 ein. Dieser Abstand wird bei der Montage der Buchse 11 in dem Gehäuse 1 auf das gewünschte Maß reduziert, da dann ein Überragen der Außenfläche des Außenrings 17 durch das Begrenzungselement 21 infolge einer Kollision mit dem Gehäuse 1 nicht mehr möglich ist.

Der Außenring 17 der Buchse 11 umfasst weiterhin noch ein Anschlagelement 22, dass eine Bewegung des Innenrings 18 bei einem Verschwenken der Schnecke nach oben in den Fig. 1 und 2 begrenzt.

Das erfindungsgemäße Lenkgetriebe bewirkt einen Ausgleich eines Getriebespiels, wie es sich insbesondere durch Fertigungstoleranzen der Bauteile des Lenkgetriebes, durch unterschiedliche thermische Dehnungen dieser Bauteile und durch Verschleiß einstellen kann. Dieser Getriebespielausgleich wird dadurch erreicht, dass das Ritzel 3 verschwenkbar gelagert ist und federbelastet gegen das Zahnrad 2 gedrückt wird. Die Federbelastung wird - ebenso wie die Ausbildung der Schwenkachse 6 - durch die Stege 14 der Buchse 10 des Festlagers 5 realisiert, die infolge der Relativverdrehung von Außenring 12 zu Innenring 13 tordiert werden und somit funktional als Torsionsfederstab wirken. Um eine hinreichende Federvorspannung zu erreichen, um den über die Lebensdauer des Lenkgetriebes zunehmenden Verschleiß auszugleichen, ist vorgesehen, das Ritzel 3 bei der Neuherstellung des Lenkgetriebes mit einem relativ großen Verschwenkwinkel zu versehen. Dazu ist vorgesehen, das Ritzel 3 so in das Gehäuse 1 zu integrieren, dass deren Längsachse 16 im Bereich des Festlagers 5 einen etwas geringeren Abstand von dem Verzahnungseingriff bzw. der Wirkungslinie 15 der Verzahnungskräfte (Fₐ₁, Fₐ₂) aufweist, als dies im Bereich des Loslagers 7 der Fall ist (vgl. Fig. 1). Dieser Versatz wird durch einen entsprechenden Versatz (x) des Innenrings 12 zu dem Außenring 13 der Buchse 10 des Festlagers 5 erreicht; diese sind somit nicht exakt konzentrisch angeordnet (vgl. Fig. 3 und 4). Dadurch wird ermöglicht, das Festlager 5 und das Loslager 7 trotz des vorgesehenen Versatzes (x) in Aufnahmen des Gehäuses 1 anzuordnen, die selbst konzentrisch sind. Dadurch kann die Herstellung des Gehäuses 1 vereinfacht werden.

### Bezugszeichenliste

- 1: Gehäuse
- 2: Zahnrad
- 3: Ritzel
- 4: Lenksäule
- 5: Festlager
- 6: Schwenkachse
- 7: Loslager
- 8: Wälzlager
- 9: Wälzlager
- 10: Buchse
- 11: Buchse
- 12: Außenring
- 13: Innenring
- 14: Steg
- 15: Verzahnungseingriff
- 16: Längsachse des Ritzels
- 17: Außenring
- 18: Innenring
- 19: Steg
- 20: Radialachse
- 21: Begrenzungselement
- 22: Anschlagelement
- 23: Nase
- 24: Vertiefung
- 25: Bund
- 26: Elastomerring

## Patentansprüche

1. Lenkgetriebe mit einem Zahnrad (2), einem damit kämmenden Ritzel (3) und einer das Ritzel (3) umfassenden Ritzelwelle, die um eine Schwenkachse (6), die quer zur Längsachse (16) der Ritzelwelle liegt, verschwenkbar gelagert ist, **dadurch gekennzeichnet, dass** der radiale Abstand der Schwenkachse (6) zu dem Verzahnungseingriff von Zahnrad (2) und Ritzel (3) kleiner als der Kernradius des Ritzels (3) ist.

2. Lenkgetriebe gemäß Anspruch 1, **dadurch gekennzeichnet, dass** der radiale Abstand der Schwenkachse (6) zu dem Verzahnungseingriff (15) von Zahnrad (2) und Ritzel (3) Null ist.

3. Lenkgetriebe gemäß Anspruch 1 oder 2, **dadurch gekennzeichnet, dass** die Ritzelwelle ein antriebsseitiges Ende aufweist, wobei die Ritzelwelle im Bereich des antriebseitigen Endes in einer (ersten) Buchse (10) gelagert ist, die einen Außenteil sowie einen innerhalb des Außenteils angeordneten Innenteil aufweist, wobei der Außenteil und der Innenteil zur Ausbildung der Schwenkachse (6) über zumindest einen deformierbaren Steg (14) verbunden sind.

4. Lenkgetriebe gemäß Anspruch 3, **dadurch gekennzeichnet, dass** der Steg (14) tordiert ist.

5. Lenkgetriebe gemäß Anspruch 3 oder 4, **dadurch gekennzeichnet, dass** das Außenteil und das Innenteil nicht konzentrisch angeordnet sind.

6. Lenkgetriebe gemäß einem der vorhergehenden Ansprüche, **dadurch gekennzeichnet, dass** die Ritzelwelle ein freies Ende aufweist, wobei die Ritzelwelle im Bereich des freien Endes in einer (zweiten) Buchse (11) gelagert ist, wobei die (zweite) Buchse (11) einen Außenteil und einen innerhalb des Außenteils angeordneten Innenteil aufweist, wobei der Außenteil und der Innenteil in einer radialen Richtung bezüglich der Ritzelwelle zueinander beweglich sind.

7. Lenkgetriebe gemäß Anspruch 5 und 6, **dadurch gekennzeichnet, dass** das Außenteil der ersten Buchse (10) und das Außenteil der zweiten Buchse (11) jeweils in einer von einem Gehäuse (1) des Lenkgetriebes ausgebildeten Aufnahme gelagert sind, wobei die zwei Aufnahmen konzentrisch angeordnet sind.

8. Lenkgetriebe gemäß Anspruch 6 oder 7, **dadurch gekennzeichnet, dass** der Außenteil der (zweiten) Buchse (11) über ein Gelenk mit dem Innenteil verbunden ist.

9. Lenkgetriebe gemäß Anspruch 8, **dadurch gekennzeichnet, dass** sich ein Abschnitt des Außenteils und ein Abschnitt des Innenteils im Bereich des Gelenks berühren, wobei diese Abschnitte von einer Hülle aus einem hochelastischen Werkstoff zumindest teilweise umgeben sind.

10. Lenkgetriebe gemäß Anspruch 8 oder 9, **dadurch gekennzeichnet, dass** der Abstand zwischen Außen- und Innenteil von dem dem Gelenk radial gegenüberliegenden Abschnitt der (zweiten) Buchse (11) kleiner als der Abstand in dem verbliebenen Abschnitt der (zweiten) Buchse (11) ist.

11. Lenkgetriebe gemäß Anspruch 10, **dadurch gekennzeichnet, dass** der Außenteil und/oder der Innenteil dem Gelenk radial gegenüberliegend ein in radialer Richtung verschiebbares Begrenzungselement (21) aufweist.

12. Lenkgetriebe gemäß Anspruch 11, **dadurch gekennzeichnet, dass** das Begrenzungselement (21) eine radiale Breite aufweist, die größer als die radiale Breite des Außenteils oder des Innenteils in demjenigen Abschnitt, in dem dieses darin verschiebbar gelagert ist, aufweist.

## Claims

1. Steering gear having a gearwheel (2), having a pinion (3) which meshes with said gearwheel, and having a pinion shaft which comprises the pinion (3) and which is mounted so as to be pivotable about a pivot axis (6) lying perpendicular to the longitudinal axis (16) of the pinion shaft, **characterized in that** the radial spacing between the pivot axis (6) and the toothing engagement of gearwheel (2) and pinion (3) is smaller than the core radius of the pinion (3).

2. Steering gear according to Claim 1, **characterized in that** the radial spacing between the pivot axis (6) and the toothing engagement (15) of gearwheel (2) and pinion (3) is zero.

3. Steering gear according to Claim 1 or 2, **characterized in that** the pinion shaft has a drive-side end, wherein, in the region of the drive-side end, the pinion shaft is mounted in a (first) bushing (10) which has an outer part and has an inner part arranged within the outer part, wherein the outer part and the inner part are connected, so as to form the pivot axis (6), by way of at least one deformable web (14).

4. Steering gear according to Claim 3, **characterized in that** the web (14) is twisted.

5. Steering gear according to Claim 3 or 4, **characterized in that** the outer part and the inner part are arranged non-concentrically.

6. Steering gear according to one of the preceding claims, **characterized in that** the pinion shaft has a free end, wherein, in the region of the free end, the pinion shaft is mounted in a (second) bushing (11), wherein the (second) bushing (11) has an outer part and has an inner part arranged within the outer part, wherein the outer part and the inner part are movable relative to one another in a radial direction with respect to the pinion shaft.

7. Steering gear according to Claims 5 and 6, **characterized in that** the outer part of the first bushing (10) and the outer part of the second bushing (11) are mounted in a respective receptacle formed by a housing (1) of the steering gear, wherein the two receptacles are arranged concentrically.

8. Steering gear according to Claim 6 or 7, **characterized in that** the outer part of the (second) bushing (11) is connected to the inner part by way of a joint.

9. Steering gear according to Claim 8, **characterized in that** a section of the outer part and a section of the inner part make contact in the region of the joint, wherein said sections are at least partially surrounded by a sleeve composed of a highly elastic material.

10. Steering gear according to Claim 8 or 9, **characterized in that** the spacing between the outer part and inner part **in that** section of the (second) bushing (11) which is situated radially opposite the joint is smaller than the spacing in the remaining section of the (second) bushing (11).

11. Steering gear according to Claim 10, **characterized in that** the outer part and/or the inner part has, radially opposite the joint, a delimiting element (21) that is displaceable in a radial direction.

12. Steering gear according to Claim 11, **characterized in that** the delimiting element (21) has a radial width greater than the radial width of the outer part or of the inner part in the section in which said delimiting element is mounted displaceably in said outer part or inner part.

## Revendications

1. Mécanisme de direction comprenant une roue dentée (2), un pignon (3) s'engrenant avec celle-ci, et un arbre de pignon comprenant le pignon (3), qui est supporté de manière à pouvoir pivoter autour d'un axe de pivotement (6) situé transversalement à l'axe longitudinal (16) de l'arbre de pignon, **caractérisé en ce que** la distance radiale de l'axe de pivotement (6) à l'engagement d'engrènement de la roue dentée (2) et du pignon (3) est inférieure au rayon du noyau du pignon (3).

2. Mécanisme de direction selon la revendication 1, **caractérisé en ce que** la distance radiale de l'axe de pivotement (6) à l'engagement d'engrènement (15) de la roue dentée (2) et du pignon (3) est nulle.

3. Mécanisme de direction selon la revendication 1 ou 2, **caractérisé en ce que** l'arbre de pignon présente une extrémité du côté de l'entraînement, l'arbre de pignon étant supporté dans la région de l'extrémité du côté de l'entraînement dans une (première) douille (10), qui présente une partie extérieure ainsi qu'une partie intérieure disposée à l'intérieur de la partie extérieure, la partie extérieure et la partie intérieure étant connectées pour réaliser l'axe de pivotement (6) par le biais d'au moins une nervure déformable (14).

4. Mécanisme de direction selon la revendication 3, **caractérisé en ce que** la nervure (14) est tordue.

5. Mécanisme de direction selon la revendication 3 ou 4, **caractérisé en ce que** la partie extérieure et la partie intérieure ne sont pas disposées concentriquement.

6. Mécanisme de direction selon l'une quelconque des revendications précédentes, **caractérisé en ce que** l'arbre de pignon présente une extrémité libre, l'arbre de pignon étant supporté dans la région de l'extrémité libre dans une (deuxième) douille (11), la (deuxième) douille (11) présentant une partie extérieure et une partie intérieure disposée à l'intérieur de la partie extérieure, la partie extérieure et la partie intérieure étant déplaçables l'une par rapport à l'autre dans une direction radiale par rapport à l'arbre de pignon.

7. Mécanisme de direction selon les revendications 5 et 6, **caractérisé en ce que** la partie extérieure de la première douille (10) et la partie extérieure de la deuxième (11) sont chacune supportées dans un logement réalisé par un boîtier (1) du mécanisme de direction, les deux logements étant disposés concentriquement.

8. Mécanisme de direction selon la revendication 6 ou 7, **caractérisé en ce que** la partie extérieure de la (deuxième) douille (11) est connectée à la partie intérieure par le biais d'une articulation.

9. Mécanisme de direction selon la revendication 8, **caractérisé en ce qu'**une portion de la partie extérieure et une portion de la partie intérieure sont en contact dans la région de l'articulation, ces portions étant entourées au moins en partie par une enveloppe constituée d'un matériau hautement élastique.

10. Mécanisme de direction selon la revendication 8 ou 9, **caractérisé en ce que** la distance entre la partie extérieure et la partie intérieure de la portion de la (deuxième) douille (11) opposée radialement à l'articulation est inférieure à la distance dans la portion restante de la (deuxième) douille (11).

11. Mécanisme de direction selon la revendication 10, **caractérisé en ce que** la partie extérieure et/ou la partie intérieure présentent, radialement en regard de l'articulation un élément de limitation (21) déplaçable dans la direction radiale.

12. Mécanisme de direction selon la revendication 11, **caractérisé en ce que** l'élément de limitation (21) présente une largeur radiale, qui est supérieure à la largeur radiale de la partie extérieure ou de la partie intérieure dans la portion dans laquelle celle-ci est supportée de manière déplaçable.
